# EUROPEAN PATENT APPLICATION

(11) **EP 4 626 123 A1**
(43) Date of publication of application: **01.10.2025**
(21) Application number: 23905696.3
(22) Date of filing: 06.12.2023
(51) Int. Cl.: H04W 72/566

(54) **COMMUNICATION METHOD AND COMMUNICATION APPARATUS**

(30) Priority: 22.12.2022 CN 202211654955
(71) Applicant: Huawei Technologies Co., Ltd., Shenzhen, Guangdong 518129 (CN)
(72) Inventor: WU, Hao, Shenzhen, Guangdong 518129 (CN); LI, Xiangyu, Shenzhen, Guangdong 518129 (CN); PENG, Wenjie, Shenzhen, Guangdong 518129 (CN)
(74) Representative: Gill Jennings & Every LLP
(86) International application number: PCT/CN2023/136711
(87) International publication number: WO 2024/131529

(57) **Abstract**

This application provides a communication method and a communication apparatus. The method includes: A transmit terminal device TX UE that supports a sidelink non-shared spectrum SL-U scenario determines, based on information about a plurality of transport blocks, one first channel access priority class CAPC value of a first resource on which a plurality of consecutive slots are located, where the first CAPC value is used by the terminal device to perform a channel access LBT procedure on the first resource. In this way, the plurality of transport blocks are continuously sent in the plurality of consecutive slots on the first resource, thereby improving transmission efficiency.

## Description

This application claims priority to Chinese Patent Application No. 202211654955.X, filed with the China National Intellectual Property Administration on December 22, 2022 and entitled "COMMUNICATION METHOD AND COMMUNICATION APPARATUS", which is incorporated herein by reference in its entirety.

### TECHNICAL FIELD

This application relates to the field of information technologies, and more specifically, to a data analysis system, method, and apparatus.

### BACKGROUND

In the 5th generation (the 5th generation, 5G) mobile communication system, in a scenario in which a terminal device UE communicates with a base station, a licensed spectrum or an unlicensed spectrum may be used. The unlicensed spectrum is a shared spectrum. To fairly use the shared spectrum, both the terminal device and a network device need to perform a listen before talk (listen before talk, LBT) channel access procedure before sending data.

In a wireless communication system, data communication may be performed between UEs through a sidelink (sidelink). In the RAN 1 #110e meeting, for a sidelink UE (sidelink UE, SL UE), it is agreed that multi-consecutive slots transmission (Multi-consecutive slots transmission, MCSt) is supported. In this manner, a quantity of channel access times when one or more transport blocks (transport blocks, TBs) are transmitted can be reduced, to improve channel access efficiency of entire communication.

Currently, type 1 LBT may be performed for transmission of one TB, to transmit the TB. However, how to transmit a plurality of TBs in a plurality of consecutive slots is an urgent problem to be resolved.

### SUMMARY

This application provides a communication method, to support an FAS of a sidelink in an unlicensed spectrum. A transmit end UE determines, based on information about a plurality of transport blocks, one channel access priority class (channel access priority class, CAPC) value of a channel occupancy time (channel occupancy time, COT) in which a plurality of consecutive slots are located, to perform a listen before talk (listen before talk, LBT) procedure based on the CAPC value. In this way, a plurality of consecutive TBs are transmitted on a plurality of consecutive slot resources, thereby improving transmission efficiency of SL-U.

According to a first aspect, a communication method is provided. The method may be performed by a terminal device, or may be performed by a component (for example, a chip or a chip system) configured in the terminal device.

Specifically, the method includes: A first terminal device obtains a first resource, where the first resource includes resources in a plurality of consecutive slots, and the first resource is used to continuously transmit a plurality of transport blocks in the plurality of consecutive slots; and the first terminal device determines a first channel access priority class CAPC value of the first resource based on information about the plurality of transport blocks, where the first CAPC value is used by the first terminal device to perform a channel access LBT procedure on the first resource.

In this application, the first resource includes the plurality of consecutive slots, and the plurality of consecutive slots are used to continuously transmit the plurality of transport blocks.

In this application, the first terminal device is a transmit terminal device that supports a sidelink in an unlicensed spectrum scenario.

According to the foregoing technical solution, the first terminal device may determine the first CAPC value of the first resource in the plurality of consecutive slots based on the information about the plurality of transport blocks, and further perform the LBT procedure on the first resource based on the first CAPC value. In this way, the plurality of TBs can be continuously transmitted on the first resource, thereby improving transmission efficiency.

With reference to the first aspect, in a possible implementation of the first aspect, the information about the plurality of transport blocks includes a CAPC value of each of the plurality of transport blocks and/or data content in each transport block.

With reference to the first aspect, in a possible implementation of the first aspect, the plurality of transport blocks are transport blocks of the first terminal device, and that the first terminal device determines a first CAPC value of the first resource based on information about the plurality of transport blocks includes: The first terminal device determines the first CAPC value based on the CAPC values of the plurality of transport blocks, where the first CAPC value is a largest CAPC value in the CAPC values of the plurality of transport blocks, or a smallest CAPC value in the CAPC values of the plurality of transport blocks, or a rounded value of an average value of the CAPC values of the plurality of transport blocks, or a CAPC value most repeated in the CAPC values of the plurality of transport blocks; the first terminal device determines the first CAPC value based on layer-1 priorities of the plurality of transport blocks, where the first CAPC value is a CAPC value corresponding to a transport block with a highest layer-1 priority; or the first terminal device determines the first CAPC value based on CAPC values of the data content in the plurality of transport blocks.

It should be understood that specific data content in each of the plurality of transport blocks has a corresponding CAPC value, and the first CAPC value is determined based on the CAPC values of all the data content.

For example, if there are only sidelink media access control control elements (sidelink media access control control elements, SL MAC CEs) in the plurality of transport blocks, a CAPC value with a highest priority is used as the first CAPC value.

If there are SCCH SDU(s) in the plurality of transport blocks, an SL CAPC value with a highest priority is used as the first CAPC value.

In other cases, when the plurality of transport blocks include logical channels carrying MAC SDUs, an SL CAPC value with a lowest priority of these logical channels is used as a CAPC value of one SL TB.

According to the foregoing technical solution, the first resource preempted by the first terminal device is not shared with another UE, and is used only to send the transport blocks of the first terminal device. The first terminal device determines the first CAPC value based on the CAPC values or the data content in the transports block of the first terminal device. The CAPC value is used by the first terminal device to perform LBT. In this way, the plurality of consecutive transport blocks are transmitted on the plurality of consecutive slot resources, thereby improving transmission efficiency.

With reference to the first aspect, in a possible implementation of the first aspect, the first resource may be further used to send an SL SSB signal, and the method includes: The first terminal device determines the first CAPC value based on the CAPC values of the plurality of transport blocks and a CAPC value of the SL SSB signal, where the first CAPC value is a largest CAPC value in the CAPC values of the plurality of transport blocks and the CAPC value of the SL SSB signal.

With reference to the first aspect, in a possible implementation of the first aspect, the first resource may be further used to send an SL SSB signal, and the first CAPC value may be a smallest CAPC value in the CAPC values of the plurality of transport blocks and a CAPC value of an SSB.

With reference to the first aspect, in a possible implementation of the first aspect, the first resource may be further used to send an SL SSB signal, and the first CAPC value may be a rounded value of an average value of the CAPC values of the plurality of transport blocks and a CAPC value of an SSB.

With reference to the first aspect, in a possible implementation of the first aspect, the first resource may be further used to send an SL SSB signal, and the first CAPC value may be a CAPC value most repeated in the CAPC values of the plurality of transport blocks and a CAPC value of an SSB.

In this solution, the first terminal device determines one CAPC value of the plurality of consecutive slots (the first resource) based on the CAPC values of all the transport blocks of the first terminal device and the CAPC value of the sent SSB signal, where the CAPC value is used by the first terminal device to perform LBT. In this way, the plurality of consecutive transport blocks are transmitted on the plurality of consecutive slot resources, thereby improving transmission efficiency.

With reference to the first aspect, in a possible implementation of the first aspect, the plurality of transport blocks include a first transport block set and a second transport block set, the first transport block set includes a plurality of transport blocks of the first terminal device, the second transport block set includes at least one transport block of a second terminal device, a CAPC value of the first transport block set is X, a CAPC value of the second transport block set is Y, X is determined based on a CAPC value of each transport block in the first transport block set, Y is determined based on a CAPC value of each transport block in the second transport block set, and both X and Y are positive integers greater than or equal to 1.

For example, X may be a largest CAPC value in the CAPC values of the transport blocks in the first transport block set, or X may be a smallest CAPC value in the CAPC values of the transport blocks in the first transport block set. This is not limited in embodiments of this application.

For example, Y may be a largest CAPC value in the CAPC values of the transport blocks in the second transport block set, or Y may be a smallest CAPC value in the CAPC values of the transport blocks in the second transport block set. This is not limited in embodiments of this application.

With reference to the first aspect, in a possible implementation of the first aspect, the first terminal device determines a largest CAPC value in the CAPC values of the plurality of transport blocks as the first CAPC value; or
the first terminal device performs packet assembly based on the CAPC value of the second transport block set, and determines that at least one of the CAPC values of the transport blocks in the first transport block set is greater than or equal to Y, and the first terminal device determines a largest CAPC value from the CAPC values of the plurality of transport blocks as the first CAPC value.

With reference to the first aspect, in a possible implementation of the first aspect, the plurality of transport blocks include a first transport block set, the first transport block set includes a plurality of transport blocks of the first terminal device, a CAPC value of the first transport block set is X, and X is determined based on a CAPC value of each transport block in the first transport block set.

With reference to the first aspect, in a possible implementation of the first aspect, when the first terminal device determines that the CAPC value X of the first transport block set is greater than or equal to a CAPC value Y of a second transport block set, the first terminal device determines a largest CAPC value in the CAPC values of the plurality of transport blocks as the first CAPC value, where the plurality of transport blocks further include the second transport block set, the second transport block set includes at least one transport block of a second terminal device, and Y is determined based on a CAPC value of each transport block in the second transport block set; or when the first terminal device determines that the CAPC value X of the first transport block set is less than a CAPC value Y of the second transport block set, the first terminal device determines a largest CAPC value in the CAPC values of the transport blocks of the first terminal device as the first CAPC value, where the plurality of transport blocks do not include the second transport block set.

With reference to the first aspect, in a possible implementation of the first aspect, when the first terminal device determines that the CAPC value X of the first transport block set is less than a CAPC value Y of the second transport block set, the first terminal device determines a transport block from other transport blocks of the first terminal device to fill a reserved slot.

Optionally, a CAPC value of the transport block is not greater than the CAPC value of the first transport block set.

With reference to the first aspect, in a possible implementation of the first aspect, when the first terminal device determines that the CAPC value X of the first transport block set is less than a CAPC value Y of the second transport block set, the first terminal device reassembles a transport block in a reserved slot.

Optionally, a CAPC value of the reassembled transport block is not greater than the CAPC value of the first transport block set.

With reference to the first aspect, in a possible implementation of the first aspect, that the first terminal device re-confirms the CAPC value of the consecutive slots may refer to a specific manner in a scenario 1. Details are not described herein again.

With reference to the first aspect, in a possible implementation of the first aspect, the first terminal device may alternatively not perform COT sharing and not perform consecutive slot transmission. In other words, transmission is performed in an existing manner. This is not limited in embodiments of this application.

In this solution, the first terminal device determines, based on the CAPC values of the transport blocks of the first terminal device and a CAPC value of the transport block of the second terminal device, whether to perform COT sharing, so as to determine one CAPC value of the plurality of consecutive slots (the first resource), where the CAPC value is used by the first terminal device to perform LBT. In this way, the plurality of consecutive transport blocks are transmitted on the plurality of consecutive slot resources, thereby improving transmission efficiency.

With reference to the first aspect, in a possible implementation of the first aspect, the first resource may be further used to send the SL SSB signal, the plurality of transport blocks include a first transport block set, the first transport block set includes a plurality of transport blocks of the first terminal device, a CAPC value of the first transport block set is X, and X is determined based on a CAPC value of each transport block in the first transport block set.

With reference to the first aspect, in a possible implementation of the first aspect, that the first terminal device determines a first CAPC value of the first resource based on information about the plurality of transport blocks includes one or more of the following manners:

The first terminal device determines the first CAPC value based on the CAPC values of the plurality of transport blocks and a CAPC value of the SL SSB signal, where the first CAPC value is a largest CAPC value in the CAPC values of the plurality of transport blocks and the CAPC value of the SL SSB signal; when the first terminal device determines that a CAPC value of the SL SSB is greater than or equal to a CAPC value of a second transport block set, the first terminal device determines a largest CAPC value from the CAPC values of the plurality of transport blocks and the CAPC value of the SL SSB signal as the first CAPC value; when the first terminal device determines that a CAPC value of the SL SSB is less than a CAPC value of the second transport block set, the first terminal device performs packet assembly based on the CAPC value of the second transport block set, and determines that at least one of the CAPC values of the transport blocks in the first transport block set is greater than or equal to Y, and the first terminal device determines a largest CAPC value from the CAPC values of the transport blocks in the first transport block set and the CAPC value of the SSB as the first CAPC value, where the plurality of transport blocks further include the second transport block set, the second transport block set includes at least one transport block of a second terminal device, and Y is determined based on a CAPC value of each transport block in the second transport block set; or when the first terminal device determines that a CAPC value of the SL SSB is less than a CAPC value of the second transport block set, and the CAPC value X of the first transport block set is less than the CAPC value Y of the second transport block set, the first terminal device determines a largest CAPC value from the CAPC values of the transport blocks in the first transport block set and the CAPC value of the SSB as the first CAPC value, where the plurality of transport blocks do not include the second transport block set.

In this solution, the first terminal device determines one CAPC value of the plurality of consecutive slots (the first resource) based on the CAPC values of the transport blocks of the first terminal device, the CAPC value of the shared transport block, and the CAPC value of the sent SSB signal, where the CAPC value is used by the first terminal device to perform LBT. In this way, the plurality of consecutive transport blocks are transmitted on the plurality of consecutive slot resources, thereby improving transmission efficiency.

With reference to the first aspect, in a possible implementation of the first aspect, the CAPC value of the SL SSB is 1.

According to a second aspect, a communication apparatus is provided. The apparatus may be a network device, or may be a component (for example, a chip or a chip system) configured in the network device.

Specifically, the apparatus includes: a transceiver unit, configured to obtain a first resource, where the first resource includes resources in a plurality of consecutive slots, and the first resource is used to continuously transmit a plurality of transport blocks in the plurality of consecutive slots; and a processing unit, configured to determine a first channel access priority class CAPC value of the first resource based on information about the plurality of transport blocks, where the first CAPC value is used by a first terminal device to perform a channel access LBT procedure on the first resource.

With reference to the second aspect, in a possible implementation of the second aspect, the information about the plurality of transport blocks includes a CAPC value of each of the plurality of transport blocks and/or data content in each transport block.

With reference to the second aspect, in a possible implementation of the second aspect, the plurality of transport blocks are transport blocks of the first terminal device, and that the processing unit is configured to determine a first CAPC value of the first resource based on information about the plurality of transport blocks includes: The processing unit is configured to determine the first CAPC value based on the CAPC values of the plurality of transport blocks, where the first CAPC value is a largest CAPC value in the CAPC values of the plurality of transport blocks, or a smallest CAPC value in the CAPC values of the plurality of transport blocks, or a rounded value an average value of the CAPC values of the plurality of transport blocks, or a CAPC value most repeated in the CAPC values of the plurality of transport blocks; the processing unit is configured to determine the first CAPC value based on layer-1 priorities of the plurality of transport blocks, where the first CAPC value is a CAPC value corresponding to a transport block with a highest layer-1 priority; or the processing unit is configured to determine the first CAPC value based on CAPC values of the data content in the plurality of transport blocks.

With reference to the second aspect, in a possible implementation of the second aspect, the first resource may be further used to send an SL SSB signal, and the method includes: The processing unit is configured to determine the first CAPC value based on the CAPC values of the plurality of transport blocks and a CAPC value of the SL SSB signal, where the first CAPC value is a largest CAPC value in the CAPC values of the plurality of transport blocks and the CAPC value of the SL SSB signal.

With reference to the second aspect, in a possible implementation of the second aspect, the plurality of transport blocks include a first transport block set and a second transport block set, the first transport block set includes a plurality of transport blocks of the first terminal device, the second transport block set includes at least one transport block of a second terminal device, a CAPC value of the first transport block set is X, a CAPC value of the second transport block set is Y, X is determined based on a CAPC value of each transport block in the first transport block set, Y is determined based on a CAPC value of each transport block in the second transport block set, and both X and Y are positive integers greater than or equal to 1.

With reference to the second aspect, in a possible implementation of the second aspect, the processing unit is configured to determine a largest CAPC value in the CAPC values of the plurality of transport blocks as the first CAPC value; or the processing unit is configured to: perform packet assembly based on the CAPC value of the second transport block set, and determine that at least one of the CAPC values of the transport blocks in the first transport block set is greater than or equal to Y, and the first terminal device determines a largest CAPC value from the CAPC values of the plurality of transport blocks as the first CAPC value.

With reference to the second aspect, in a possible implementation of the second aspect, the plurality of transport blocks include a first transport block set, the first transport block set includes a plurality of transport blocks of the first terminal device, a CAPC value of the first transport block set is X, and X is determined based on a CAPC value of each transport block in the first transport block set.

With reference to the second aspect, in a possible implementation of the second aspect, the processing unit is configured to: when determining that the CAPC value X of the first transport block set is greater than or equal to a CAPC value Y of a second transport block set, determine a largest CAPC value in the CAPC values of the plurality of transport blocks as the first CAPC value, where the plurality of transport blocks further include the second transport block set, the second transport block set includes at least one transport block of a second terminal device, and Y is determined based on a CAPC value of each transport block in the second transport block set; or the processing unit is configured to: when determining that the CAPC value X of the first transport block set is less than a CAPC value Y of the second transport block set, determine a largest CAPC value in the CAPC values of the transport blocks of the first terminal device as the first CAPC value, where the plurality of transport blocks do not include the second transport block set.

With reference to the second aspect, in a possible implementation of the second aspect, the first resource may be further used to send the SL SSB signal, the plurality of transport blocks include a first transport block set, the first transport block set includes a plurality of transport blocks of the first terminal device, a CAPC value of the first transport block set is X, and X is determined based on a CAPC value of each transport block in the first transport block set.

With reference to the second aspect, in a possible implementation of the second aspect, that the processing unit is configured to determine a first CAPC value of the first resource based on information about the plurality of transport blocks includes one or more of the following manners:

The processing unit is configured to determine the first CAPC value based on the CAPC values of the plurality of transport blocks and a CAPC value of the SL SSB signal, where the first CAPC value is a largest CAPC value in the CAPC values of the plurality of transport blocks and the CAPC value of the SL SSB signal; the processing unit is configured to: when determining that a CAPC value of the SL SSB is greater than or equal to a CAPC value of a second transport block set, determine a largest CAPC value from the CAPC values of the plurality of transport blocks and the CAPC value of the SL SSB signal as the first CAPC value; the processing unit is configured to: when determining that a CAPC value of the SL SSB is less than a CAPC value of the second transport block set, perform packet assembly based on the CAPC value of the second transport block set, and determine that at least one of the CAPC values of the transport blocks in the first transport block set is greater than or equal to Y, and the processing unit is configured to determine a largest CAPC value from the CAPC values of the transport blocks in the first transport block set and the CAPC value of the SSB as the first CAPC value, where the plurality of transport blocks further include the second transport block set, the second transport block set includes at least one transport block of a second terminal device, and Y is determined based on a CAPC value of each transport block in the second transport block set; or the processing unit is configured to: when determining that a CAPC value of the SL SSB is less than a CAPC value of the second transport block set, and the CAPC value X of the first transport block set is less than the CAPC value Y of the second transport block set, determine a largest CAPC value from the CAPC values of the transport blocks in the first transport block set and the CAPC value of the SSB as the first CAPC value, where the plurality of transport blocks do not include the second transport block set.

With reference to the second aspect, in a possible implementation of the second aspect, the CAPC value of the SL SSB is 1.

According to a third aspect, a communication apparatus is provided, including modules or units configured to perform the method in any one of the possible implementations of the first aspect.

According to a fourth aspect, a communication apparatus is provided, including a processor. The processor is coupled to a memory, and may be configured to execute instructions in the memory, to implement the method in any one of the possible implementations of the first aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip configured in the terminal device, the communication interface may be an input/output interface.

Optionally, the transceiver may be a transceiver circuit. Optionally, the input/output interface may be an input/output circuit.

According to a fifth aspect, a processor is provided, including an input circuit, an output circuit, and a processing circuit. The processing circuit is configured to: receive a signal via the input circuit, and transmit the signal via the output circuit, so that the processor performs the method in any one of possible implementations of the first aspect.

In a specific implementation procedure, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a sixth aspect, a processing apparatus is provided, including a processor and a memory. The processor is configured to read instructions stored in the memory, receive a signal through a receiver, and transmit a signal through a transmitter, to perform the method in any one of possible implementations of the first aspect.

Optionally, there are one or more processors, and there are one or more memories.

Optionally, the memory and the processor may be integrated together, or the memory and the processor may be separately disposed.

In a specific implementation procedure, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange procedure such as sending of indication information may be a procedure of outputting the indication information from the processor, and receiving of capability information may be a procedure of receiving the input capability information by the processor. Specifically, data output by the processor may be output to a transmitter, and input data received by the processor may be from a receiver. The transmitter and the receiver may be collectively referred to as a transceiver.

The processing apparatus in the sixth aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a seventh aspect, a computer program product is provided. The computer program product includes a computer program (which may also be referred to as code or instructions). When the computer program runs, a computer is enabled to perform the method in any one of possible implementations of the seventh aspect.

According to an eighth aspect, a computer-readable storage medium is provided. The computer-readable storage medium stores a computer program (which may also be referred to as code or instructions). When the computer program runs on a computer, the computer is enabled to perform the method in any one of possible implementations of the first aspect.

For beneficial effect of the second aspect to the eighth aspect, refer to the beneficial effect of the first aspect. Details are not described again.

### BRIEF DESCRIPTION OF DRAWINGS

FIG. 1 is a diagram of an architecture of a communication system to which an embodiment of this application is applicable;
FIG. 2 is a diagram of performing transmission by a communication device by using a scheduled resource in an unlicensed spectrum communication scenario according to an embodiment of this application;
FIG. 3 is a diagram of a COT mechanism according to an embodiment of this application.
FIG. 4 is a diagram of a COT sharing mechanism according to an embodiment of this application;
FIG. 5 is a schematic flowchart of a communication method according to an embodiment of this application;
FIG. 6 is a diagram of a structure of a COT according to an embodiment of this application;
FIG. 7 is a diagram of a structure of another COT according to an embodiment of this application;
FIG. 8 is a block diagram of a communication apparatus according to an embodiment of this application; and
FIG. 9 is a diagram of a communication architecture according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (Long Term Evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th Generation, 5G) mobile communication system, or a new radio access technology (new radio Access Technology, NR). The 5G mobile communication system may include non-standalone (non-standalone, NSA) networking and/or standalone (standalone, SA) networking. The technical solutions provided in embodiments of this application may be further applied to a future communication system, such as a sixth generation mobile communication system. This is not limited in this application.

The technical solutions provided in this application may be further applied to various communication scenarios, for example, machine type communication (machine type communication, MTC), long term evolution-machine (Long Term Evolution-machine, LTE-M), a device-to-device (device-to device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as a vehicle to X device (vehicle to X, V2X, X can stand for anything). For example, the V2X may include: vehicle to vehicle (vehicle to vehicle, V2V) communication, vehicle to infrastructure (vehicle to infrastructure, V2I) communication, vehicle to pedestrian communication (vehicle to vehicle, V2P), vehicle to network (vehicle to network, V2N) communication, or the like.

In embodiments of this application, a network device may be any device with wireless receiving and sending functions. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or home NodeB, HNB), a baseband unit (baseband unit, BBU), an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, may be 5G, for example, NR, a gNB in a system, or a transmission point (TRP or TP), or one antenna panel or one group of antenna panels (including a plurality of antenna panels) of a base station in a 5G system, or may be a network node that forms a gNB or a transmission point, for example, a baseband unit (BBU), a distributed unit (distributed unit, DU), or the like.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and a service, and implements functions of radio resource control (radio resource control, RRC) and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and a terminal device communicates with the cell through a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

In embodiments of this application, the terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice and data connectivity for a user, for example, a handheld device having a wireless connection function or a vehicle-mounted device. Currently, some examples of the terminal may be: a mobile phone (mobile phone), a tablet computer (pad), a computer having wireless receiving and sending functions (for example, a notebook computer or a palmtop computer), a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, and a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device may alternatively be a terminal device in an internet of things (internet of things, IoT) system. IoT is an important component in development of future information technologies. A main technical feature of IoT is to connect an object to a network by using a communication technology, to implement an intelligent network of human-machine interconnection and thing-thing interconnection. An IoT technology may implement massive connections, deep coverage, and terminal power saving by using, for example, a narrowband (narrowband) NB technology.

In addition, the terminal device may alternatively include a sensor such as an intelligent printer, a train detector, or a gas station. Main functions include collecting data (some terminal devices), receiving control information and downlink data from a network device, sending an electromagnetic wave, and transmitting uplink data to the network device.

In this application, the terminal device is particularly a device that can support sidelink communication, for example, a vehicle-mounted terminal or a handheld terminal that can perform V2X communication.

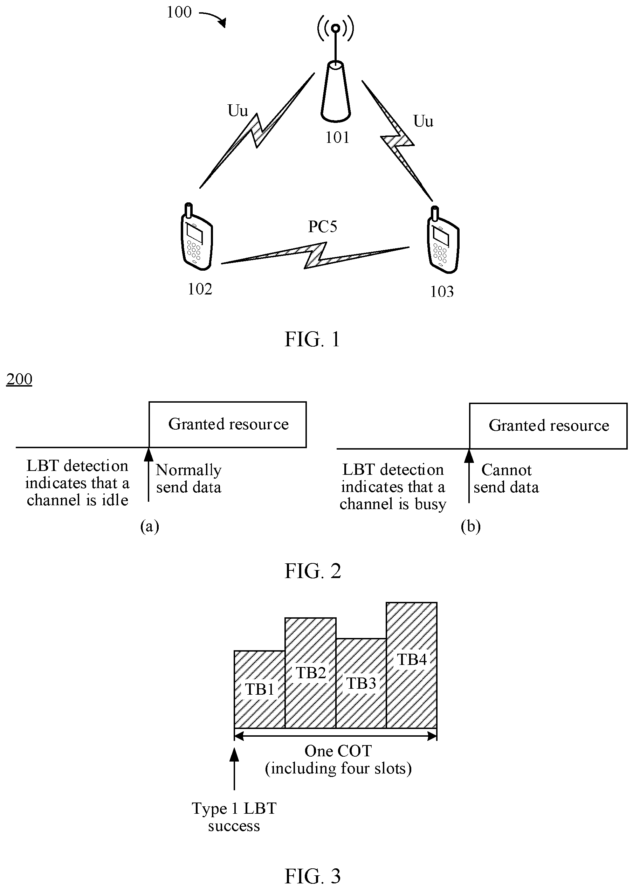

For ease of understanding of embodiments of this application, a communication system applicable to embodiments of this application is first described in detail with reference to FIG. 1. FIG. 1 is a diagram of a communication system 100 to which an embodiment of this application is applicable. As shown in FIG. 1, the communication system 100 may include at least one network device, such as a network device 101 shown in FIG. 1. The communication system 100 may further include at least two terminal devices, such as terminal devices 102 and 103 shown in FIG. 1. The terminal device 102 and the terminal device 103 may be mobile or fixed. One or more of the network device 101 and the terminal device 102 or the terminal device 103 may communicate with each other through a radio link. Each network device may provide communication coverage for a specific geographical area, and may communicate with a terminal device located in the coverage area.

In the system, terminal devices may perform data communication with each other over a network, or may directly communicate with each other. For example, the terminal device 102 and the terminal device 103 shown in FIG. 1 communicate with each other through a PC5 interface, and a link between the terminal device 102 and the terminal device 103 is referred to as a sidelink (sidelink). The sidelink supports unicast, multicast, and broadcast communication. In the unicast communication scenario, the terminal device 102 serves as a transmission user equipment (transmission UE, TX UE), and the terminal device 103 serves as a reception user equipment (reception UE, RX UE). The terminal device 102 may obtain a sidelink resource from the network device 102 through a Uu link, and the terminal device 102 sends data to the terminal device 103 through the sidelink resource.

It should be understood that FIG. 1 shows an example of one network device, a plurality of terminal devices, and a communication link between communication devices. Optionally, the communication system 100 may include a plurality of network devices, and coverage of each network device may include another quantity of terminal devices, for example, more or fewer terminal devices. This is not limited in this application.

It should be noted that when the communication system 100 includes the plurality of network devices, a terminal device in a coverage area of each network device may send uplink data to any network device, or may send uplink data to a plurality of network devices. For example, uplink data sent by a terminal device in an adjacent area of coverage areas of two network devices may be received by one of the two network devices, or may be jointly received by the two network devices.

A plurality of antennas may be configured for the foregoing communication devices, for example, the network device 101 and the terminal devices 102 and 103 in FIG. 1. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device may communicate with the terminal devices by using a multi-antenna technology.

Optionally, the wireless communication system 100 may further include another network entity like a network controller or a mobility management entity. This is not limited in embodiments of this application.

For ease of understanding content of embodiments of this application, the following describes terms in this application in detail.

### 1. Licensed spectrum and unlicensed spectrum

In a scenario in which a UE communicates with a base station, used spectrum resources are classified into a licensed spectrum and an unlicensed spectrum. The licensed spectrum is allowed to be used only by some organizations or operators, and the unlicensed spectrum is a shared spectrum and can be used by different operators/organizations. To fairly use the unlicensed spectrum, a terminal and a network device need to perform an LBT procedure (a channel access procedure) before sending data.

### 2. LBT procedure

A listen before talk (listen before talk, LBT) procedure may be understood as a channel access procedure. LBT is usually performed at a granularity of a channel (for example, 20 MHz). Before sending a signal (for example, a data signal) on a channel (for example, denoted as a first channel), a communication device may first detect whether the first channel is idle, for example, detect whether a nearby communication device is occupying the first channel to send a signal. The detection procedure may be referred to as clear channel assessment (clear channel assessment, CCA) or a channel access procedure. Specifically, there are two types of channel access procedures, which are denoted as a type 1 channel access procedure and a type 2 channel access procedure.

The type 1 (Type 1 LBT) channel access procedure (which may also be referred to as a fallback-based channel access procedure) may be energy detection based on a fallback mechanism. A window is defined for a specific bandwidth. A range of a quantity of detected slots is defined in the window. The communication device randomly selects a value A in the window (or the value range). After the communication device detects at least A idle energy detection slots, it is considered that a channel is idle, and the communication device can use the idle channel to transmit data. Otherwise, it is considered that the channel is busy, and the communication device does not use the busy channel to transmit data. The window is determined based on a channel access priority class (channel access priority class, CAPC) of the transmitted data. Idle energy detection indicates that signal energy received within fixed duration is less than or equal to a second preset threshold. A first preset threshold and the second preset threshold may be predefined, for example, predefined in a protocol. This is not limited. In addition, there is no limitation relationship between the first preset threshold and the second preset threshold, and the first preset threshold and the second preset threshold may be the same or may be different.

The type 2 (Type 2 LBT) channel access procedure (which may also be referred to as a fixed-duration-based channel access procedure) may be fixed-duration-based energy detection. For a specific bandwidth, for example, 20 MHz, if signal energy received by the communication device (the communication device may be a terminal device or a network device) within fixed duration (for example, 16 µs and 25 µs) is less than or equal to the first preset threshold, it is considered that a channel is idle, and the communication device can use the idle channel to transmit data. Otherwise, it is considered that the channel is busy, and the communication device does not use the busy channel to transmit data.

Two results may be obtained by performing the channel access procedure: The channel access procedure is completed (also referred to as an LBT success) and the channel access procedure is not completed (also referred to as an LBT failure). There are a plurality of time domain start positions in a time-frequency resource used for data transmission. If it is determined that the channel is idle before any time domain start position, it may be considered that the channel access procedure is completed. If it is determined that the channel is busy before all the time domain start positions, it may be considered that the channel access procedure is not completed.

FIG. 2 is a diagram of performing transmission by a communication device by using a scheduled resource in an unlicensed spectrum communication scenario according to an embodiment of this application. FIG. 2 is merely an example. An LBT procedure is performed before a granted resource position, to determine whether a channel is idle. For example, in (a) in FIG. 2, if LBT detection indicates that the channel is idle, data may be started to be normally sent at a start position of the granted resource position, and a channel access procedure is completed. In (b) in FIG. 2, if LBT channel detection fails, that is, it is considered that the channel is busy, data cannot be sent at the granted resource position, and the channel access procedure fails.

### 3. COT mechanism and sharing mechanism of an SL UE in an unlicensed spectrum

A purpose of introducing a channel occupancy time (channel occupancy time, COT) mechanism is to avoid frequent type 1 LBT detection when a device sends continuous data. This is a characteristic of transmission in the unlicensed spectrum. When the UE detects that all channels are idle before sending data on a scheduled resource, that is, type 1 LBT detection succeeds, the UE sends the data on the resource. To enable subsequent continuous data to continue to be sent in terms of time, a protocol specifies that the UE is allowed to continue to use the resource for a subsequent period of time without performing type 1 LBT. This period is called the channel occupancy time (COT). In this way, in one COT, the device can more easily and successfully transmit a plurality of pieces of data on the channel, thereby improving sending efficiency of the transmit UE in the unlicensed spectrum.

FIG. 3 is a diagram of a COT mechanism in an unlicensed spectrum scenario according to an embodiment of this application. FIG. 3 is merely an example. As shown in FIG. 3, type 1 LBT of a UE succeeds and preempts one time resource of four consecutive slots. The UE may send four transport blocks on the time resource of the four consecutive slots. The time resource of the four consecutive slots are referred to as one COT. In this COT, only a first LBT procedure needs to be completed, thereby improving sending efficiency of the transmit UE in the unlicensed spectrum.

COT sharing mechanism: In a COT sharing mechanism in a sidelink, an important principle is that if another UE obtains the COT of the TX UE, a CAPC corresponding to the data sent by the UE cannot be lower than a CAPC corresponding to the COT preempted by the TX UE. In this way, the COT sharing mechanism between sidelink UEs (sidelink UE, SL UE) can comply with legal and regulatory requirements of the unlicensed spectrum.

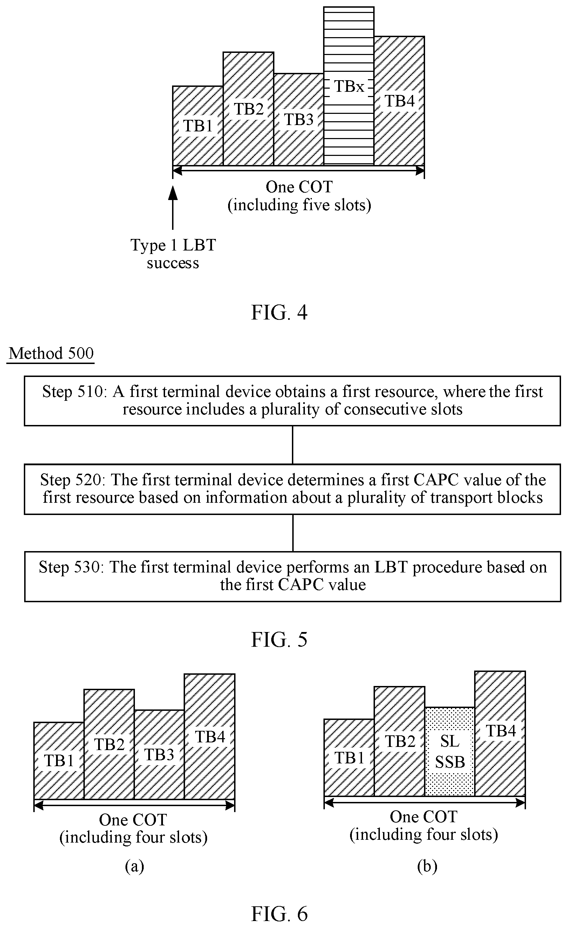

FIG. 4 is a diagram of a COT sharing mechanism according to an embodiment of this application. FIG. 4 is merely an example. As shown in FIG. 4, type 1 LBT of a TX UE succeeds and successfully preempts one COT of five consecutive slots. The TX UE may share one slot with another UE for the another UE to send data. However, a priority of the data sent by the UE cannot be lower than a priority of the COT preempted by the UE.

### 4. Logical channel prioritization (logical channel prioritization, LCP) procedure of an SL UE

The LCP procedure of the SL UE is a packet assembly procedure of the SL UE. The SL UE places to-be-sent logical channels such as a sidelink traffic channel (sidelink traffic channel, STCH) and a sidelink control channel (sidelink control channel, SCCH), and a sidelink media access control control element (sidelink media access control control element, SL MAC CE) into a transport block TB.

### 5. Definition of a CAPC of a sidelink in an unlicensed spectrum (sidelink-unlicensed, SL-U)

In one SL TB, the TB includes logical channel data (such as an STCH and an SCCH) and an SL MAC CE. The STCH mainly includes traffic data, such as a sidelink data radio bearer (sidelink data radio bearer, SL DRB). The SCCH mainly includes control signaling data, such as a sidelink signaling radio bearer (sidelink signaling radio bearer, SL SRB). The SL MAC CE is mainly control signaling generated at a media access control (media access control, MAC) layer.

According to conclusions of 3GPP RAN 2 #119bis and #120 meetings, as in NR-U, a CAPC of data of one SL DRB is configured based on a per-DRB granularity. CAPCs of all SL-SRBs are fixed to a highest priority (that is, a smallest CAPC value). CAPCs of all SL MAC CEs are fixed to a highest priority (that is, a smallest CAPC value).

A CAPC value of one SL TB in SL-U is determined as follows:
In the #119 meeting (119bis) of a 3rd generation partnership project (3rd Generation Partnership Project, 3GPP) radio access network (radio access network, RAN), the CAPC in SL-U is determined as follows:
When a network does not indicate the CAPC value of the one SL TB by using downlink control information (downlink control information, DCI), an SL UE determines the CAPC based on content of the SL TB.

If there are only SL MAC CEs(s) in the SL TB, a CAPC value with a highest priority is used as the CAPC value of the SL TB.

If there are SCCH SDUs(s) in the SL TB, an SL CAPC value with a highest priority is used as the CAPC value of the SL TB.

In other cases, when one SL TB includes logical channels carrying MAC SDUs, an SL CAPC value with a lowest priority of these logical channels is used as the CAPC value of the SL TB.

### 6. SL SSB and PSBCH in SL-U

A physical sidelink broadcast channel (physical sidelink broadcast channel, PSBCH) is used for a sidelink synchronization signal and a PBCH block resource. Type 1 LBT or type 2 LBT is used for the PSBCH, and a CAPC of the PSBCH is configurable (for example, a radio resource control (radio resource control, RRC) message) or fixed. In this application, the CAPC value of the SL SSB signal in SL-U may be fixed to 1. The physical layer learns of a resource position of the SL SSB, but the MAC layer does not learn of information about the resource position of the SL SSB.

### 7. L1 priority

When transmitting an SL TB to a physical layer, a MAC layer confirms importance of the TB. The importance is indicated by the L1 priority with numbers ranging from 1 to 8. A smaller value indicates higher importance.

A priority of one SL TB is determined based on a highest priority corresponding to a logical channel or an SL MAC CE included in the SL TB.

In the 3GPP technical standard (technical specification group, TSG) RAN work group (work group, WG) #110e meeting, multi-consecutive slot transmission (Multi-consecutive slots transmission, MCSt) is supported for SL-U. In this manner, a quantity of channel access times when one or more TBs are transmitted can be reduced, to improve channel access efficiency of entire communication. As a non-limiting example, as shown in FIG. 5, when a plurality of TBs are transmitted in an MCSt manner, LBT needs to be successfully performed only before new transmission of a TB 1, and a COT of a plurality of consecutive slots (which may respectively correspond to initial transmission resources and/or retransmission resources of the plurality of TBs) is obtained through preemption. In this way, type 1 LBT does not need to be performed again for subsequent retransmission of the TB 1 and new transmission or retransmission of another TB, and more simple and efficient type 2 LBT can be performed. The subsequent TB herein may be a TB of another UE, that is, an SL TX UE shares a resource in the COT with the another SL UE.

When there is data in each process at a MAC layer of the TX UE, a physical layer is triggered to perform resource selection, and then the physical layer may feed back a candidate resource set to the MAC layer. Resources in one slot may be selected in one process at the MAC layer and packet assembly is performed on the resources, that is, corresponding data such as SL logical information and an SL MAC CE are placed on a given resource grant. The figure shows a procedure in which resource selection is triggered in a plurality of processes.

The MAC layer determines, based on a plurality of candidate resource sets, whether there are resources in a plurality of consecutive slots. If yes, the MAC layer considers to perform MCst. Otherwise, the MAC layer does not perform MCst.

In a conventional technology, the MAC layer determines one CAPC value for transmission of one TB, and performs type 1 LBT based on the CAPC to preempt one COT. However, if the MAC layer determines to perform MCst, in one COT of SL-U, how to support transmission of the plurality of TBs (including the SL TB and an SL SSB that are of the MAC layer, and the SL TB of the another UE) in the plurality of consecutive slots is an urgent problem to be resolved.

Based on this, this embodiment of this application provides a communication method, a TX UE that supports SL-U determines, based on information about a plurality of TBs, one CAPC value of a COT in which a plurality of consecutive slots are located, so as to perform an LBT procedure based on the CAPC value. In this way, a plurality of consecutive TBs are transmitted on a plurality of consecutive slot resources, thereby improving transmission efficiency of SL-U.

The following describes in detail a communication method provided in an embodiment of this application.

It should be understood that, for ease of understanding and description, the following describes in detail the method provided in embodiments of this application through interaction between a terminal device and a network device as an example. However, this should not constitute any limitation on an execution body of the method provided in this application. For example, the terminal device in the following embodiments may be replaced with a component (for example, a chip or a chip system) configured in the terminal device. The network device in the following embodiments may be replaced with a component (for example, a chip or a chip system) configured in the network device.

A specific structure of an execution body of the method provided in embodiments of this application is not specifically limited in the following embodiments, provided that a program that records code of the method provided in embodiments of this application can be run to perform communication according to the method provided in embodiments of this application. For example, the method provided in embodiments of this application may be performed by the terminal device or the network device, or a functional module that can invoke and execute a program in the terminal device or the network device.

FIG. 5 is a flowchart of a communication method according to an embodiment of this application.

S510: A first terminal device obtains a first resource.

In this application, the first terminal device is a transmit terminal device that supports a sidelink in an unlicensed spectrum scenario, for example, the terminal device 102 shown in FIG. 1.

The first resource includes resources in a plurality of consecutive slots, and the first resource is used to continuously transmit a plurality of transport blocks TBs in the plurality of consecutive slots.

For example, the first resource may be used to transmit TBs of a same terminal device. For example, the first resource may be one COT including four consecutive slots shown in FIG. 3.

For example, the first resource may be used to transmit TBs of different terminal devices. For example, the first resource may be one COT including five consecutive slots shown in FIG. 4.

It should be understood that the plurality of TBs may be initial transmission resources, or may be retransmission resources.

It may be understood that, when there is data in each process at a MAC layer of the first terminal device, a physical layer is triggered to perform resource selection, and then the physical layer may feed back a candidate resource set to the MAC layer. Resources in one slot may be selected in one process at the MAC layer and packet assembly is performed on the resources, that is, corresponding data such as SL logical information and an SL MAC CE are placed on a given resource grant. The MAC layer determines, based on a plurality of candidate resource sets, whether there are resources in a plurality of consecutive slots. If yes, the MAC layer considers to perform MCst. Otherwise, the MAC layer does not perform MCst.

The first terminal device obtains the first resource from a network device. This is not limited in embodiments of this application.

For example, the network device may send configuration information of the first resource to the first terminal device through an RRC configuration or a SIB message.

It should be understood that when the network device sends the configuration information of the first resource to the first terminal device, when the configuration is in an allowed state, the first terminal device performs transmission through the first resource.

S520: The first terminal device determines a first priority class CAPC value of the first resource based on information about the plurality of TBs.

The first terminal device may determine one CAPC value based on the information about the plurality of TBs, and the CAPC value is used by the first terminal device to perform an LBT procedure on the first resource.

It should be noted that before transmitting the plurality of TBs on the first resource, the first terminal device needs to perform an LBT procedure once. In other words, the first terminal device needs to determine one CAPC value for LBT.

In this application, the information about the plurality of transport blocks includes a CAPC value of each of the plurality of transport blocks and/or data content in each transport block.

The information about the plurality of transport blocks may further include other information. This is not limited in embodiments of this application.

The CAPC value of the transport block may be determined in a plurality of manners.

For example, the network device may indicate the CAPC value of the transport block by using DCI, and the first terminal device determines the CAPC value of the transport block based on the DCI indication.

For another example, when the network device does not indicate the CAPC value of the transport block by using DCI, the first terminal device may determine one CAPC value of the transport block based on data content in the transport block. In this application, a manner of determining the CAPC value of the transport block based on the data content in the transport block is not limited. For example, the CAPC value is determined based on priorities of the SL MAC CE, the SCCH SDU(s), or the logical channel of the MAC SDU in the foregoing. For details, refer to specific content of "Definition of a CAPC of a sidelink in an unlicensed spectrum (sidelink-unlicensed, SL-U)" in the foregoing.

The data content in each transport block may include, for example, the SL MAC CE and the logical channel. This is not limited in embodiments of this application.

In this application, the first terminal device determines the first CAPC value of the first resource in different manners in different application scenarios based on the information about the plurality of transport blocks. The following describes in detail a specific manner of determining the first CAPC value.

In a possible implementation, the plurality of transport blocks include a transport block of the first terminal device. This solution corresponds to the following scenario 1.

Scenario 1: COT non-sharing scenario. In other words, the first resource preempted by the first terminal device is not shared with another UE, and is used only to send the transport blocks of the first terminal device, that is, the plurality of transport blocks are transport blocks of the first terminal device.

(a) in FIG. 6 shows a diagram of a structure of a COT in this scenario. FIG. 6 is merely an example for description. In (a) in FIG. 6, the COT may be an example of the first resource. The COT includes four consecutive slots, the four consecutive slots are used to transmit transport blocks TB1, TB2, TB3, and TB4, and the transport blocks TB1, TB2, TB3, and TB4 are transport blocks of the first terminal device, that is, in the COT, the first terminal device continuously sends four transport blocks of the first terminal device.

In this scenario, the first terminal device may determine the first CAPC value of the first resource based on the information about the plurality of transport blocks in at least one of the following two manners.

Manner 1: The first terminal device determines the first CAPC value based on the CAPC values of the plurality of transport blocks.

For example, the first CAPC value may be a largest CAPC value in the CAPC values of the plurality of transport blocks.

For example, the first CAPC value may be a smallest CAPC value in the CAPC values of the plurality of transport blocks.

For example, the first CAPC value may be a rounded value of an average value of the CAPC values of the plurality of transport blocks.

It should be understood that the average value may be rounded up, or may be rounded down.

For example, the first CAPC value may be a CAPC value most repeated in the CAPC values of the plurality of transport blocks.

For example, the first CAPC value may be a CAPC value corresponding to a transport block with a highest layer-1 priority.

For example, if there are a plurality of same transport blocks with a highest layer-1 priority, a largest CAPC value is selected as the first CAPC value.

The foregoing is merely an example for description. There may be another manner of determining the first CAPC value based on the CAPC values of the plurality of transport blocks. This is not limited to the foregoing example.

Manner 2: The first terminal device determines the first CAPC value based on a CAPC value of the data content in each of the plurality of transport blocks.

It should be understood that specific data content in each of the plurality of transport blocks has a corresponding CAPC value, and the first CAPC value is determined based on the CAPC values of all the data content.

If there are only SL MAC CE(s) in the plurality of transport blocks, a CAPC value with a highest priority is used as the first CAPC value.

If there are SCCH SDU(s) in the plurality of transport blocks, an SL CAPC value with a highest priority is used as the first CAPC value.

In other cases, when the plurality of transport blocks include logical channels carrying MAC SDUs, an SL CAPC value with a lowest priority of these logical channels is used as a CAPC value of one SL TB.

The foregoing is merely an example for description. There may be another manner of determining the first CAPC value based on the data content in each of the plurality of transport blocks. This is not limited to the foregoing example.

In this solution, the first terminal device determines one CAPC value of the plurality of consecutive slots (the first resource) based on the CAPC values of all the transport blocks of the first terminal device or the content in the transport block. The CAPC value is used by the first terminal device to perform LBT. In this way, the plurality of consecutive transport blocks are transmitted on the plurality of consecutive slot resources, thereby improving transmission efficiency.

In another possible implementation, the plurality of transport blocks include a transport block of the first terminal device, and the first resource is further used to send an SL SSB signal. This solution corresponds to the following scenario 2.

Scenario 2: In a COT non-sharing scenario, the first resource is further used to send the SL SSB signal. In other words, the consecutive slots of the first resource are not only used to send the transport blocks of the first terminal device, but also used to send the SL SSB signal.

(b) in FIG. 6 shows a diagram of a structure of a COT in this scenario. FIG. 6 is merely an example for description. In (b) in FIG. 6, the COT may be an example of the first resource. The COT includes four consecutive slots, the four consecutive slots are used to transmit transport blocks TB1, TB2, TB3, and an SL SSB, and the transport blocks TB1, TB2, and TB3 are transport blocks of the first terminal device, that is, in the COT, the first terminal device continuously sends three transport blocks of the first terminal device and one SSB signal.

In this scenario, a manner in which the first terminal device determines the first CAPC value of the first resource based on the information about the plurality of transport blocks is specifically as follows:
The first terminal device determines the first CAPC value based on the CAPC values of the plurality of transport blocks and a CAPC value of the SSB.

For example, the first CAPC value may be a largest CAPC value in the CAPC values of the plurality of transport blocks and the CAPC value of the SSB.

For example, the first CAPC value may be a smallest CAPC value in the CAPC values of the plurality of transport blocks and the CAPC value of the SSB.

For example, the first CAPC value may be a rounded value of an average value of the CAPC values of the plurality of transport blocks and the CAPC value of the SSB.

It should be understood that the average value may be rounded up, or may be rounded down.

For example, the first CAPC value may be a CAPC value most repeated in the CAPC values of the plurality of transport blocks and the CAPC value of the SSB.

The foregoing is merely an example for description. There may be another manner of determining the first CAPC value based on the CAPC values of the plurality of transport blocks and the CAPC value of the SSB. This is not limited to the foregoing example.

In this solution, the first terminal device determines one CAPC value of the plurality of consecutive slots (the first resource) based on the CAPC values of all the transport blocks of the first terminal device and the CAPC value of the sent SSB signal, where the CAPC value is used by the first terminal device to perform LBT. In this way, the plurality of consecutive transport blocks are transmitted on the plurality of consecutive slot resources, thereby improving transmission efficiency.

In another possible implementation, the plurality of transport blocks include a first transport block set and a second transport block set. This solution corresponds to the following scenario 3.

The first transport block set includes a plurality of transport blocks of the first terminal device, the second transport block set includes at least one transport block of a second terminal device, a CAPC value of the first transport block set is X, a CAPC value of the second transport block set is Y, X is determined based on a CAPC value of each transport block in the first transport block set, Y is determined based on a CAPC value of each transport block in the second transport block set, and both X and Y are positive integers greater than or equal to 1.

For example, X may be a largest CAPC value in the CAPC values of the transport blocks in the first transport block set, or X may be a smallest CAPC value in the CAPC values of the transport blocks in the first transport block set. This is not limited in embodiments of this application.

For example, Y may be a largest CAPC value in the CAPC values of the transport blocks in the second transport block set, or Y may be a smallest CAPC value in the CAPC values of the transport blocks in the second transport block set. This is not limited in embodiments of this application.

In the scenario 3, an example in which X is used as a largest value and Y is used as a largest value is used for description.

Scenario 3: COT sharing scenario. In other words, the first resource preempted by the first terminal device may be shared with another UE, and may be not only used to send the transport blocks of the first terminal device, but also used by the second terminal device to send the transport block of the second terminal device, that is, the plurality of transport blocks are the transport blocks of the first terminal device and the transport block of the second terminal device.

It should be noted that a CAPC value of the first resource preempted by the first terminal device is not less than a CAPC value of the transport block of the second terminal device.

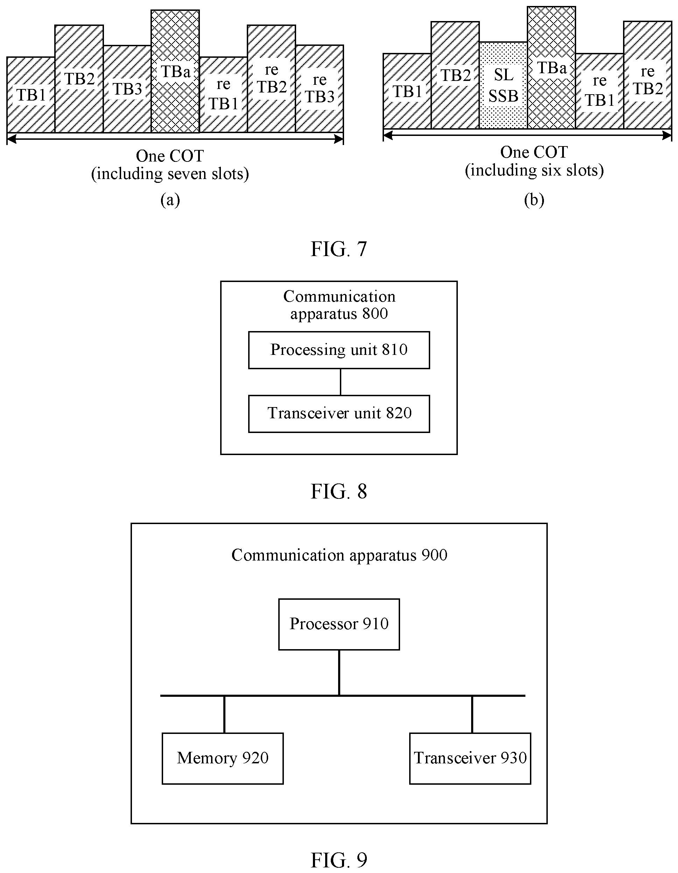

(a) in FIG. 7 shows a diagram of a structure of a COT in this scenario. FIG. 7 is merely an example for description. In (a) in FIG. 7, the COT may be an example of the first resource. The COT includes seven consecutive slots. The seven consecutive slots are used to transmit transport blocks TB1, TB2, and TB3, TBa of the second terminal device, and retransmitted transport blocks TB1, TB2, and TB3. The transport blocks TB1, TB2, and TB3 are transport blocks of the first terminal device, and the TBa is a transport block of the second terminal device. That is, in the COT, the transport blocks of the first terminal device and the transport block of the second terminal device are continuously transmitted.

In this scenario, the first terminal device may determine the first CAPC value of the first resource based on the information about the plurality of transport blocks in at least one of the following two manners.

Manner 1: The first terminal device determines the first CAPC value from the CAPC values of the plurality of transport blocks.

It should be understood that an LCP procedure has been completed in a plurality of processes at the MAC layer of the first terminal device, so that the transport blocks in the first transport block set have been determined.

It should be understood that, in this manner, the transport blocks of the first terminal device have been assembled, and that the CAPC value of the first resource preempted by the first terminal device is not less than the CAPC value of the transport block of the second terminal device is met.

For example, the first terminal device determines a largest CAPC value based on CAPC values of all transport blocks in the first transport block set and the second transport block set as the first CAPC value.

For example, the first terminal device determines a smallest CAPC value based on CAPC values of all transport blocks in the first transport block set and the second transport block set as the first CAPC value.

For example, the first terminal device determines a CAPC value most repeated in CAPC values of all transport blocks in the first transport block set and the second transport block set as the first CAPC value.

Manner 2: The first terminal device performs packet assembly based on the CAPC value of the second transport block set, and determines that at least one of the CAPC values of the transport blocks in the first transport block set is greater than or equal to Y, and the first terminal device determines the first CAPC value from the CAPC values of the plurality of transport blocks.

It should be understood that, that the first terminal device performs packet assembly may be understood as that an LCP procedure is being performed in at least one process at the MAC layer of the first terminal device, to determine the transport blocks in the first transport block set.

It should be understood that, in this manner, packet assembly has not been performed on the transport blocks of the first terminal device. For example, the LCP procedure is being performed in the at least one process at the MAC layer of the first terminal device, and generation of a MAC PDU is not completed in the LCP procedure. Packet assembly is performed based on the CAPC value of the second transport block set, to meet a rule that the CAPC value of the first resource preempted by the first terminal device is not less than the CAPC value of the transport block of the second terminal device.

For example, the first terminal device determines a largest CAPC value based on CAPC values of all transport blocks in the first transport block set and the second transport block set as the first CAPC value.

For example, the first terminal device determines a smallest CAPC value based on CAPC values of all transport blocks in the first transport block set and the second transport block set as the first CAPC value.

For example, the first terminal device determines a CAPC value most repeated in CAPC values of all transport blocks in the first transport block set and the second transport block set as the first CAPC value.

It should be noted that, when the first terminal device performs packet assembly based on the CAPC value of the second transport block set, "at least one of the CAPC values of the transport blocks in the first transport block set is greater than or equal to Y" may not be obtained through assembly. The first terminal device may not perform COT sharing. The first terminal device may refer to the following manner 2 in which the first terminal device does not perform COT sharing. Details are not described herein again.

In another possible implementation, the first terminal device determines that a first transport block set is included, and the first resource includes a shared slot reserved for another UE, and the first terminal device determines, based on the CAPC value of the first transport block set, whether to share the first resource with the second terminal device.

In this scenario, the first terminal device may determine the first CAPC value of the first resource based on the information about the plurality of transport blocks in at least one of the following two manners.

Manner 1: When the first terminal device determines that the CAPC value X of the first transport block set is greater than or equal to a CAPC value Y of a second transport block set, the first terminal device determines the first CAPC value from the CAPC values of the plurality of transport blocks.

It should be understood that the plurality of transport blocks further include the second transport block set. That is, if a COT sharing condition is met, a slot of the first resource is shared with the second terminal device. In other words, the plurality of transport blocks include the first transport block set and the second transport block set.

For example, the first terminal device determines a largest CAPC value based on CAPC values of all transport blocks in the first transport block set and the second transport block set as the first CAPC value.

For example, the first terminal device determines a smallest CAPC value based on CAPC values of all transport blocks in the first transport block set and the second transport block set as the first CAPC value.

For example, the first terminal device determines a CAPC value most repeated in CAPC values of all transport blocks in the first transport block set and the second transport block set as the first CAPC value.

Manner 2: When the first terminal device determines that the CAPC value X of the first transport block set is less than a CAPC value Y of a second transport block set, the first terminal device determines the first CAPC value from the CAPC values of the transport blocks of the first terminal device.

For example, the first terminal device determines a largest CAPC value based on the CAPC values of the transport blocks of the first terminal device as the first CAPC value.

For example, the first terminal device determines a smallest CAPC value based on the CAPC values of the transport blocks of the first terminal device as the first CAPC value.

For example, the first terminal device determines a CAPC value most repeated in the CAPC values of the transport blocks of the first terminal device as the first CAPC value.

It should be understood that the plurality of transport blocks do not include the second transport block set. That is, if a COT sharing condition is not met, a slot of the second resource is not shared with the second terminal device. In other words, the plurality of transport blocks include the first transport block set, and a reserved slot is also used to transmit the transport blocks of the first terminal device.

It should be noted that, if the first terminal device does not perform COT sharing but performs consecutive slot transmission, the first terminal device needs to fill the reserved slot with the transport blocks of the first terminal device.

For example, the first terminal device determines a transport block from other transport blocks of the first terminal device to fill the reserved slot.

Optionally, a CAPC value of the transport block is not greater than the CAPC value of the first transport block set.

It should be understood that, if the first terminal device cannot determine, from the other transport blocks of the first terminal device, a proper transport block to fill the reserved slot, the first terminal device may not perform consecutive slot transmission.

For example, the first terminal device reassembles a transport block in the reserved slot.

Optionally, a CAPC value of the reassembled transport block is not greater than the CAPC value of the first transport block set.

For example, that the first terminal device re-confirms the CAPC value of the consecutive slots may refer to a specific manner in the scenario 1. Details are not described herein again.

For example, the first terminal device may not perform COT sharing or perform consecutive slot transmission. In other words, transmission is performed in an existing manner. This is not limited in embodiments of this application.

In this solution, the first terminal device determines, based on the CAPC values of the transport blocks of the first terminal device and a CAPC value of the transport block of the second terminal device, whether to perform COT sharing, so as to determine one CAPC value of the plurality of consecutive slots (the first resource), where the CAPC value is used by the first terminal device to perform LBT. In this way, the plurality of consecutive transport blocks are transmitted on the plurality of consecutive slot resources, thereby improving transmission efficiency.

In another possible implementation, the plurality of transport blocks include a first transport block set, and the first resource is further used to send an SL SSB signal. This solution corresponds to the following scenario 4.

Scenario 4: In a COT sharing scenario, the first resource is further used to send the SL SSB signal. In other words, the consecutive slots of the first resource are not only used to send the transport block, but also used to send the SL SSB signal.

(b) in FIG. 7 shows a diagram of a structure of a COT in this scenario. FIG. 7 is merely an example for description. In (b) in FIG. 7, the COT may be an example of the first resource. The COT includes six consecutive slots. The six consecutive slots are used to transmit transport blocks TB1, TB2, an SL SSB, TBa of the second terminal device, and retransmitted transport blocks TB1 and TB2. The transport blocks TB1 and TB2 are transport blocks of the first terminal device, and the TBa is a transport block of the second terminal device. In other words, in the COT, the transport blocks of the first terminal device, the transport block of the second terminal device, and the SSB signal are continuously transmitted.

In this scenario, the first terminal device may determine the first CAPC value of the first resource based on the information about the plurality of transport blocks in one or more of the following four manners.

Manner 1: The first terminal device determines the first CAPC value from the CAPC values of the plurality of transport blocks and a CAPC value of the SSB signal.

For example, the first CAPC value may be a largest CAPC value in the CAPC values of the plurality of transport blocks and the CAPC value of the SSB.

For example, the first CAPC value may be a smallest CAPC value in the CAPC values of the plurality of transport blocks and the CAPC value of the SSB.

For example, the first CAPC value may be a rounded value of an average value of the CAPC values of the plurality of transport blocks and the CAPC value of the SSB.

It should be understood that the average value may be rounded up, or may be rounded down.

For example, the first CAPC value may be a CAPC value most repeated in the CAPC values of the plurality of transport blocks and the CAPC value of the SSB.

The foregoing is merely an example for description. There may be another manner of determining the first CAPC value based on the CAPC values of the plurality of transport blocks and the CAPC value of the SSB. This is not limited to the foregoing example.

Manner 2: When the first terminal device determines that a CAPC value of the SL SSB is greater than or equal to a CAPC value of a second transport block set, the first terminal device determines the first CAPC value from the CAPC values of the plurality of transport blocks and the CAPC value of the SL SSB signal.

For example, the first CAPC value may be a largest CAPC value in the CAPC values of the plurality of transport blocks and the CAPC value of the SSB.

For example, the first CAPC value may be a smallest CAPC value in the CAPC values of the plurality of transport blocks and the CAPC value of the SSB.

For example, the first CAPC value may be a rounded value of an average value of the CAPC values of the plurality of transport blocks and the CAPC value of the SSB.

It should be understood that the average value may be rounded up, or may be rounded down.

For example, the first CAPC value may be a CAPC value most repeated in the CAPC values of the plurality of transport blocks and the CAPC value of the SSB.

The foregoing is merely an example for description. There may be another manner of determining the first CAPC value based on the CAPC values of the plurality of transport blocks and the CAPC value of the SSB. This is not limited to the foregoing example.

Manner 3: When the first terminal device determines that a CAPC value of the SL SSB is less than a CAPC value of a second transport block set, the first terminal device performs packet assembly based on the CAPC value of the second transport block set, and determines that at least one of CAPC values of transport blocks in the first transport block set is greater than or equal to Y, and the first terminal device determines a largest CAPC value from the CAPC values of the plurality of transport blocks and the CAPC value of the SSB as the first CAPC value.

It should be understood that, that the first terminal device performs packet assembly may be understood as that an LCP procedure is being performed in a plurality of process at the MAC layer of the first terminal device, to determine the transport blocks in the first transport block set.

In this case, the plurality of transport blocks further include the second transport block set.

It should be understood that the plurality of transport blocks further include the second transport block set. That is, if a COT sharing condition is met, a slot of the first resource is shared with the second terminal device. In other words, the plurality of transport blocks include the first transport block set and the second transport block set.

For example, the first CAPC value may be a largest CAPC value in the CAPC values of the plurality of transport blocks and the CAPC value of the SSB.

For example, the first CAPC value may be a smallest CAPC value in the CAPC values of the plurality of transport blocks and the CAPC value of the SSB.

For example, the first CAPC value may be a rounded value of an average value of the CAPC values of the plurality of transport blocks and the CAPC value of the SSB.

It should be understood that the average value may be rounded up, or may be rounded down.

For example, the first CAPC value may be a CAPC value most repeated in the CAPC values of the plurality of transport blocks and the CAPC value of the SSB.

The foregoing is merely an example for description. There may be another manner of determining the first CAPC value based on the CAPC values of the plurality of transport blocks and the CAPC value of the SSB. This is not limited to the foregoing example.

Manner 4: When the first terminal device determines that a CAPC value of the SL SSB is less than a CAPC value of a second transport block set, and the CAPC value X of the first transport block set is less than the CAPC value Y of the second transport block set, the first terminal device determines the first CAPC value from the CAPC values of the transport blocks in the first transport block set and the CAPC value of the SSB.

In this case, the plurality of transport blocks do not include the second transport block set.

It should be understood that the plurality of transport blocks do not include the second transport block set. In other words, if a COT sharing condition is not met, a slot of the first resource is not shared with the second terminal device.

For example, the first CAPC value may be a largest CAPC value in the CAPC value of the first transport block set and the CAPC value of the SSB.

For example, the first CAPC value may be a smallest CAPC value in the CAPC value of the first transport block set and the CAPC value of the SSB.

For example, the first CAPC value may be a rounded value of an average value of the CAPC value of the first transport block set and the CAPC value of the SSB.

It should be understood that the average value may be rounded up, or may be rounded down.

For example, the first CAPC value may be a CAPC value most repeated in the CAPC value of the first transport block set and the CAPC value of the SSB.

The foregoing is merely an example for description. There may be another manner of determining the first CAPC value based on the CAPC value of the first transport block set and the CAPC value of the SSB. This is not limited to the foregoing example.

In this application, the CAPC value of the SL SSB may be 1.

In this solution, the first terminal device determines one CAPC value of the plurality of consecutive slots (the first resource) based on the CAPC values of the transport blocks of the first terminal device, the CAPC value of the shared transport block, and the CAPC value of the sent SSB signal, where the CAPC value is used by the first terminal device to perform LBT. In this way, the plurality of consecutive transport blocks are transmitted on the plurality of consecutive slot resources, thereby improving transmission efficiency.

S530: The first terminal device performs an LBT procedure based on the first CAPC value.

The first terminal device performs a type 1 LBT procedure based on the determined first CAPC value. After LBT detection indicates that the channel is idle, the first terminal device transmits data through the first resource. If LBT detection fails, the first terminal device cannot transmit the data.

Step S530 is an optional step.

According to this technical solution, the TX UE that supports SL-U determines, based on the information about the plurality of TBs, one CAPC value of the COT in which the plurality of consecutive slots are located, so as to perform the LBT procedure based on the CAPC value. In this way, the plurality of consecutive TBs are transmitted on the plurality of consecutive slot resources, thereby improving transmission efficiency of SL-U.

FIG. 8 is a block diagram of a communication apparatus according to an embodiment of this application. As shown in FIG. 8, a communication apparatus 800 includes a transceiver unit 820 and a processing unit 810. The transceiver unit 820 may be configured to implement a corresponding communication function, and the processing unit 810 may be configured to process data.

Optionally, the transceiver unit 820 may also be referred to as a communication interface or a communication unit, and includes a sending unit and/or a receiving unit. The transceiver unit 820 may be a transceiver (including a transmitter and/or a receiver), an input/output interface (including an input interface and/or an output interface), a pin, a circuit, or the like. The transceiver unit 820 may be configured to perform a sending step and/or a receiving step in the foregoing method embodiments.

Optionally, the processing unit 810 may be a processor (which may include one or more processors), a processing circuit having a processor function, or the like, and may be configured to perform a step other than sending and receiving in the foregoing method embodiments.

Optionally, the apparatus 800 further includes a storage unit. The storage unit may be a memory, an internal storage unit (for example, a register or a cache), an external storage unit (for example, a read-only memory or a random access memory), or the like. The storage unit is configured to store instructions. The processing unit 810 executes the instructions stored in the storage unit, to enable the communication apparatus to perform the foregoing methods.

In a design, the apparatus 800 may be configured to perform an action performed by the first terminal device in the foregoing method embodiments. For example, the apparatus 800 may be configured to perform an action performed by the first terminal device in the foregoing method 500. In this case, the apparatus 800 may be a component of the first terminal device. The transceiver unit 820 is configured to perform an operation related to receiving and sending of the first terminal device in the foregoing method, and the processing unit 810 is configured to perform a processing-related operation of the first terminal device in the foregoing method embodiments.

Specifically, the transceiver unit 820 is configured to determine a first resource, where the first resource includes resources in a plurality of consecutive slots, and the first resource is used to continuously transmit a plurality of transport blocks in the plurality of consecutive slots. The processing unit 810 is configured to determine a first channel access priority class CAPC value of the first resource based on information about the plurality of transport blocks, where the first CAPC value is used by the first terminal device to perform a channel access LBT procedure on the first resource.

Optionally, the information about the plurality of transport blocks includes a CAPC value of each of the plurality of transport blocks and/or data content in each transport block.

Optionally, the processing unit 810 is specifically configured to determine the first CAPC value based on the CAPC values of the plurality of transport blocks, where the first CAPC value is a largest CAPC value in the CAPC values of the plurality of transport blocks, or a smallest CAPC value in the CAPC values of the plurality of transport blocks, or a rounded value of an average value of the CAPC values of the plurality of transport blocks, or a CAPC value most repeated in the CAPC values of the plurality of transport blocks;
the processing unit 810 is specifically configured to determine the first CAPC value based on layer-1 priorities of the plurality of transport blocks, where the first CAPC value is a CAPC value corresponding to a transport block with a highest layer-1 priority; or
the processing unit 810 is specifically configured to determine the first CAPC value based on CAPC values of the data content in the plurality of transport blocks.

Optionally, the first resource may be further used to send an SL SSB signal. The processing unit 810 is specifically configured to determine the first CAPC value based on the CAPC values of the plurality of transport blocks and a CAPC value of the SL SSB signal, where the first CAPC value is a largest CAPC value in the CAPC values of the plurality of transport blocks and the CAPC value of the SL SSB signal.

Optionally, the plurality of transport blocks include a first transport block set and a second transport block set, the first transport block set includes a plurality of transport blocks of the first terminal device, the second transport block set includes at least one transport block of a second terminal device, a CAPC value of the first transport block set is X, a CAPC value of the second transport block set is Y, X is determined based on a CAPC value of each transport block in the first transport block set, Y is determined based on a CAPC value of each transport block in the second transport block set, and both X and Y are positive integers greater than or equal to 1.

Optionally, the processing unit 810 is configured to determine a largest CAPC value in the CAPC values of the plurality of transport blocks as the first CAPC value; or
the processing unit 810 is configured to: perform packet assembly based on the CAPC value of the second transport block set, and determine that at least one of the CAPC values of the transport blocks in the first transport block set is greater than or equal to Y, and the first terminal device determines a largest CAPC value from the CAPC values of the plurality of transport blocks as the first CAPC value.

Optionally, the plurality of transport blocks include a first transport block set, the first transport block set includes a plurality of transport blocks of the first terminal device, a CAPC value of the first transport block set is X, and X is determined based on a CAPC value of each transport block in the first transport block set.

Optionally, the processing unit 810 is configured to: when determining that the CAPC value X of the first transport block set is greater than or equal to a CAPC value Y of a second transport block set, determine a largest CAPC value in the CAPC values of the plurality of transport blocks as the first CAPC value, where the plurality of transport blocks further include the second transport block set, the second transport block set includes at least one transport block of a second terminal device, and Y is determined based on a CAPC value of each transport block in the second transport block set; or the processing unit 810 is configured to: when determining that the CAPC value X of the first transport block set is less than a CAPC value Y of the second transport block set, determine a largest CAPC value in the CAPC values of the transport blocks of the first terminal device as the first CAPC value, where the plurality of transport blocks do not include the second transport block set.

Optionally, the first resource may be further used to send the SL SSB signal, the plurality of transport blocks include a first transport block set, the first transport block set includes a plurality of transport blocks of the first terminal device, a CAPC value of the first transport block set is X, and X is determined based on a CAPC value of each transport block in the first transport block set.

Optionally, the first terminal device determines the first CAPC value based on the CAPC values of the plurality of transport blocks and a CAPC value of the SL SSB signal, where the first CAPC value is a largest CAPC value in the CAPC values of the plurality of transport blocks and the CAPC value of the SL SSB signal.

Optionally, the processing unit 810 is configured to: when determining that a CAPC value of the SL SSB is greater than or equal to a CAPC value of a second transport block set, the first terminal device determines a largest CAPC value from the CAPC values of the plurality of transport blocks and the CAPC value of the SL SSB signal as the first CAPC value; the processing unit 810 is configured to: when determining that a CAPC value of the SL SSB is less than a CAPC value of the second transport block set, the first terminal device performs packet assembly based on the CAPC value of the second transport block set, and determines that at least one of the CAPC values of the transport blocks in the first transport block set is greater than or equal to Y, and the first terminal device determines a largest CAPC value from the CAPC values of the transport blocks in the first transport block set and the CAPC value of the SSB as the first CAPC value, where the plurality of transport blocks further include the second transport block set, the second transport block set includes at least one transport block of a second terminal device, and Y is determined based on a CAPC value of each transport block in the second transport block set; or the processing unit 810 is configured to: when determining that a CAPC value of the SL SSB is less than a CAPC value of the second transport block set, and the CAPC value X of the first transport block set is less than the CAPC value Y of the second transport block set, the first terminal device determines a largest CAPC value from the CAPC values of the transport blocks in the first transport block set and the CAPC value of the SSB as the first CAPC value, where the plurality of transport blocks do not include the second transport block set.

Optionally, the CAPC value of the SL SSB is 1.

It should be understood that the transceiver unit 820 and the processing unit 810 may further perform other operations performed by the first terminal device in the method 500. Details are not described herein again.

It should be further understood that the apparatus 800 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the network device in the foregoing embodiments, and may be configured to perform procedures and/or steps corresponding to the network device in the foregoing method embodiments. To avoid repetition, details are not described herein again.

The apparatus 800 in each of the foregoing solutions has functions of implementing the corresponding steps performed by the terminal device in the foregoing methods, or the apparatus 800 in each of the foregoing solutions has functions of implementing the corresponding steps performed by the network device in the foregoing methods. The function may be implemented by hardware, or may be implemented by executing corresponding software by hardware. The hardware or software includes one or more modules corresponding to the foregoing function. For example, a transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform sending and receiving operations and a related processing operation in the method embodiments.

In addition, the transceiver unit 820 may alternatively be a transceiver circuit (for example, may include a receiving circuit and a sending circuit), and the processing module may be a processing circuit.

It should be noted that the apparatus in FIG. 8 may be the network element or the device in the foregoing embodiments, or may be a chip or a chip system, for example, a system on chip (system on chip, SoC). The transceiver module may be an input/output circuit or a communication interface. The processing module is a processor, a microprocessor, or an integrated circuit integrated on the chip. This is not limited herein.

FIG. 9 is a diagram of a communication architecture according to an embodiment of this application. A communication apparatus 900 shown in FIG. 9 includes a processor 910, a memory 920, and a transceiver 930. The processor 910 is coupled to the memory 920, and is configured to execute instructions stored in the memory 920, to control the transceiver 930 to send a signal and/or receive a signal.

It should be understood that the processor 910 and the memory 920 may be combined into one processing apparatus, and the processor 910 is configured to execute program code stored in the memory 920 to implement the foregoing functions. During specific implementation, the memory 920 may alternatively be integrated into the processor 910, or may be independent of the processor 910. It should be understood that the processor 910 may alternatively correspond to each processing unit in the foregoing communication apparatus, and the transceiver 930 may correspond to each receiving unit and sending unit in the foregoing communication apparatus.

It should be further understood that the transceiver 930 may include a receiver (or referred to as a receiver machine) and a transmitter (or referred to as a transmitter machine). The transceiver may further include an antenna, and there may be one or more antennas. The transceiver may alternatively be a communication interface or an interface circuit.

Specifically, the communication apparatus 900 may correspond to the terminal device and the network device in the method 700 and the method 800 according to embodiments of this application. It should be understood that a specific process in which the units perform the foregoing corresponding steps is described in detail in the foregoing method embodiments, and for brevity, details are not described herein.

When the communication apparatus 900 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing methods can be implemented by using a hardware integrated logic circuit in the processor, or by using instructions in a form of software. The steps in the methods disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid state disk, SSD)), or the like.

In embodiments of this application, the terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and is within the protection scope of this application.

It should be further understood that, in this application, "when" and "if" mean that the UE or the base station performs corresponding processing in an objective situation, are not intended to limit time, do not require the UE or the base station to necessarily perform a determining action during implementation, and do not mean another limitation.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of listed items. For example, "at least one of A, B, and C" may represent the following six cases: Only A exists, Only B exists, Only C exists, both A and B exist, both B and C exist, and all A, B, and C exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first terminal device, a first resource, wherein the first resource comprises resources in a plurality of consecutive slots, and the first resource is used to continuously transmit a plurality of transport blocks in the plurality of consecutive slots; and
determining, by the first terminal device, a first channel access priority class CAPC value of the first resource based on information about the plurality of transport blocks, wherein the first CAPC value is used by the first terminal device to perform a channel access LBT procedure on the first resource.

2. The method according to claim 1, wherein the information about the plurality of transport blocks comprises a CAPC value of each of the plurality of transport blocks and/or data content in each transport block.

3. The method according to claim 1 or 2, wherein the plurality of transport blocks are transport blocks of the first terminal device, and determining, by the first terminal device, the first CAPC value of the first resource based on the information about the plurality of transport blocks comprises:
determining, by the first terminal device, the first CAPC value based on the CAPC values of the plurality of transport blocks, wherein the first CAPC value is a largest CAPC value in the CAPC values of the plurality of transport blocks, or a smallest CAPC value in the CAPC values of the plurality of transport blocks, or a rounded value of an average value of the CAPC values of the plurality of transport blocks, or a CAPC value most repeated in the CAPC values of the plurality of transport blocks;
determining, by the first terminal device, the first CAPC value based on layer-1 priorities of the plurality of transport blocks, wherein the first CAPC value is a CAPC value corresponding to a transport block with a highest layer-1 priority; or
determining, by the first terminal device, the first CAPC value based on CAPC values of the data content in the plurality of transport blocks.

4. The method according to claim 1 or 2, wherein the first resource may be further used to send an SL SSB signal, and the method comprises:
determining, by the first terminal device, the first CAPC value based on the CAPC values of the plurality of transport blocks and a CAPC value of the SL SSB signal, wherein the first CAPC value is a largest CAPC value in the CAPC values of the plurality of transport blocks and the CAPC value of the SL SSB signal.

5. The method according to claim 1 or 2, wherein the plurality of transport blocks comprise a first transport block set and a second transport block set, the first transport block set comprises a plurality of transport blocks of the first terminal device, the second transport block set comprises at least one transport block of a second terminal device, a CAPC value of the first transport block set is X, a CAPC value of the second transport block set is Y, X is determined based on a CAPC value of each transport block in the first transport block set, Y is determined based on a CAPC value of each transport block in the second transport block set, and both X and Y are positive integers greater than or equal to 1.

6. The method according to claim 5, wherein determining, by the first terminal device, the first CAPC value of the first resource based on the information about the plurality of transport blocks comprises:
determining, by the first terminal device, a largest CAPC value in the CAPC values of the plurality of transport blocks as the first CAPC value; or
performing, by the first terminal device, packet assembly based on the CAPC value of the second transport block set, and determining that at least one of the CAPC values of the transport blocks in the first transport block set is greater than or equal to Y, and determining, by the first terminal device, a largest CAPC value from the CAPC values of the plurality of transport blocks as the first CAPC value.

7. The method according to claim 1 or 2, wherein the plurality of transport blocks comprise a first transport block set, the first transport block set comprises a plurality of transport blocks of the first terminal device, a CAPC value of the first transport block set is X, and X is determined based on a CAPC value of each transport block in the first transport block set.

8. The method according to claim 7, wherein determining, by the first terminal device, the first CAPC value of the first resource based on the information about the plurality of transport blocks comprises:
when the first terminal device determines that the CAPC value X of the first transport block set is greater than or equal to a CAPC value Y of a second transport block set, determining, by the first terminal device, a largest CAPC value in the CAPC values of the plurality of transport blocks as the first CAPC value, wherein the plurality of transport blocks further comprise the second transport block set, the second transport block set comprises at least one transport block of a second terminal device, and Y is determined based on a CAPC value of each transport block in the second transport block set; or
when the first terminal device determines that the CAPC value X of the first transport block set is less than a CAPC value Y of the second transport block set, determining, by the first terminal device, a largest CAPC value in the CAPC values of the transport blocks of the first terminal device as the first CAPC value, wherein the plurality of transport blocks do not comprise the second transport block set.

9. The method according to claim 1 or 2, wherein the first resource may be further used to send an SL SSB signal, the plurality of transport blocks comprise a first transport block set, the first transport block set comprises a plurality of transport blocks of the first terminal device, a CAPC value of the first transport block set is X, and X is determined based on a CAPC value of each transport block in the first transport block set.

10. The method according to claim 9, wherein determining, by the first terminal device, the first CAPC value of the first resource based on the information about the plurality of transport blocks comprises one or more of the following manners:
determining, by the first terminal device, the first CAPC value based on the CAPC values of the plurality of transport blocks and a CAPC value of the SL SSB signal, wherein the first CAPC value is a largest CAPC value in the CAPC values of the plurality of transport blocks and the CAPC value of the SL SSB signal;
when the first terminal device determines that a CAPC value of the SL SSB is greater than or equal to a CAPC value of a second transport block set, determining, by the first terminal device, a largest CAPC value from the CAPC values of the plurality of transport blocks and the CAPC value of the SL SSB signal as the first CAPC value;
when the first terminal device determines that a CAPC value of the SL SSB is less than a CAPC value of the second transport block set, performing, by the first terminal device, packet assembly based on the CAPC value of the second transport block set, and determining that at least one of the CAPC values of the transport blocks in the first transport block set is greater than or equal to Y, and determining, by the first terminal device, a largest CAPC value from the CAPC values of the transport blocks in the first transport block set and the CAPC value of the SSB as the first CAPC value, wherein the plurality of transport blocks further comprise the second transport block set, the second transport block set comprises at least one transport block of a second terminal device, and Y is determined based on a CAPC value of each transport block in the second transport block set; or
when the first terminal device determines that a CAPC value of the SL SSB is less than a CAPC value of the second transport block set, and the CAPC value X of the first transport block set is less than the CAPC value Y of the second transport block set, determining, by the first terminal device, a largest CAPC value from the CAPC values of the transport blocks in the first transport block set and the CAPC value of the SSB as the first CAPC value, wherein the plurality of transport blocks do not comprise the second transport block set.

11. The method according to any one of claims 1 to 10, wherein the CAPC value of the SL SSB is 1.

12. A communication apparatus, comprising a unit configured to perform the method according to any one of claims 1 to 10.

13. A communication apparatus, comprising a processor, wherein the processor is coupled to a memory, the memory is configured to store a computer program or instructions, and the processor is configured to execute the computer program or the instructions in the memory, to enable the apparatus to perform the method according to any one of claims 1 to 11.

14. A computer-readable storage medium, wherein the computer-readable storage medium stores a computer program or instructions, and when the computer program or the instructions are run on a computer, the computer is enabled to perform the method according to any one of claims 1 to 11.

15. A computer program product, wherein when the computer program product is run on a computer, the computer is enabled to perform the method according to any one of claims 1 to 11.
